Europäisches Patentamt

European Patent Office

Office européen des brevets

(11) Publication number: **0 192 237**
**B1**

# EUROPEAN PATENT SPECIFICATION

(45) Date of publication of patent specification: **27.06.90**

(51) Int. Cl.⁵: **A 62 D 3/00**

(21) Application number: **86102067.5**

(22) Date of filing: **18.02.86**

(54) **Process for the degradation of enviromentally persistent organic compounds.**

(30) Priority: **19.02.85 US 702944**

(43) Date of publication of application:
**27.08.86 Bulletin 86/35**

(45) Publication of the grant of the patent:
**27.06.90 Bulletin 90/26**

(84) Designated Contracting States:
**CH DE FR GB IT LI NL SE**

(56) References cited:
**US-A-4 554 075**

**CHEMICAL ABSTRACTS, vol. 103, no. 8, 26th August 1985, page 300, no. 58608r, Columbus, Ohio, US; J.A. BUMPUS et al.: "Oxidation of persistent environmental pollutants by a white rot fungus", & SCIENCE 1985, 228(4706), 1434-6**

**CHEMICAL ABSTRACTS, vol. 103, no. 1, 8th July 1985, page 169, no. 1754f, Columbus, Ohio, US; D.C. EATON: "Mineralization of polychlorinated biphenyls by Phanerochaete chrysosporium: a ligninolytic fungus", & ENZYME MICROB. TECHNOL. 1985, 7(5), 194-6**

(73) Proprietor: **Utah State University Foundation Research & Technology Park Suite 108 1780 N Research Park Way**
**Logan Utah 84321 (US)**

(72) Inventor: **Aust, Steven D.**
**251 Noble Road**
**Williamston Michigan 38895 (US)**
Inventor: **Tien, Ming**
**38D University Houses**
**Madison Wisconsin 53705 (US)**
Inventor: **Bumpus, John A.**
**1467 Farwood**
**East Lansing Michigan 48823 (US)**

(74) Representative: **Orr, William McLean et al**
**URQUHART-DYKES & LORD 5th Floor, Tower House Merrion Way**
**Leeds West Yorkshire, LS2 8PA (GB)**

**EP 0 192 237 B1**

(56) References cited:

CHEMICAL ABSTRACTS, vol. 102, no. 19, 13th
May 1985, page 493, no. 165220j, Columbus,
Ohio, US; A.L. HATAKKA et al.: "Cultivation of
wood-rotting fungi on agricultural
lignocellulosic materials for the production of
crude protein", & AGRIC. WASTES 1985, 12(2),
81-97

BIOTECHNOLOGY ADVANCES, vol. 2, no. 2,
February 1984, pages 301-308, Pergamon Press
Ltd., Oxford, GB; T.W. JOYCE et al.: "A
continuous biological process to decolorize
bleach plant effluents"

CHEMICAL ABSTRACTS, vol. 101, no. 16, 15th
October 1984, page 117, no. 132759t, Columbus,
Ohio, US; Y. KAMAYA et al.: "Degradation of
lignin substructure models with biphenyl
linkage by Phanerochaete chrysosporium
burds", & WOOD RES. 1984, 70, 25-8

CHEMICAL ABSTRACTS, vol. 98, no. 16, 18th
April 1983, page 92, no. 127930g, Columbus,
Ohio, US; C.L. CHEN et al.: "Carboxylic acids
produced through oxidative cleavage of
aromatic rings during degradation of lignin in
spruce wood by Phanerochaete
chrysosporium", & J. WOOD CHEM. TECHNOL.
1983, 3(1), 35-57

PROCEEDINGS OF THE NATIONAL ACADEMY
OF SCIENCE USA, vol. 81, April 1984, pages
2280-2284, Washington, DC, US; M. TIEN et al.:
"Lignin-degrading enzyme from Phanerochaete
chrysosporium: purification, characterization,
and catalytic properties of a unique H2O2-
requiring oxygenase"

**Description**

Background of the invention
(1) Field of the invention

The present invention proposes and demonstrates a method for degrading environmentally persistent organic compounds. In particular the present invention uses a common fungus *Phanerochaete chrysosporium* and its biodegrading enzymes for such degradation.

This work was performed under Environmental Protection Agency Contract No. CR-811464-01-0.

(2) Prior art

Large quantities of synthetic organohalides are present in the biosphere as environmental pollutants. As a group, organohalides are often toxic and/or carcinogenic. Additionally, many organohalides are persistent in the environment and tend to bioaccumulate in the body fat of animals occupying higher trouphic levels. One reason for their persistence is the fact that microorganisms which normally possess the ability to degrade or metabolize a wide spectrum of organic compounds are either unable to degrade these persistent chemicals or do so very slowly.

The environment is contaminated with relatively persistent polyhalogenated bicyclic organic compounds. Polychlorinated biphenyls (PCB's) in the organic layer on the bottom of the Kalamazoo River and polybrominated biphenyls (PBB's) in the Gratiot County landfill in Michigan and many other areas are examples. Frequently these contaminated sites are biologically inactive because they are essentially anaerobic or lack the necessary microorganisms for biodegradation.

The most complete solution to environmental contamination by halogenated organic compounds proposed to date is incineration; however, this is usually impractical where there are large volumes of waste to be processed or where the matrix or material containing the compounds is difficult to process. One possible alternative solution is a temporary aerobic landfill which would accomplish the degradation using microorganisms. The problem is that most microorganisms are only able to metabolize the halogenated organic compounds partially and selectively and are greatly affected by the intermediate compounds encountered in the biodegradation.

Lignin degradation is an enzymatic process which can be accomplished by some fungi. This is particularly shown by Forney, L. J. et al, *Journal of Biological Chemistry* 257, 11455—11462 (1982) and by Tien, M. et al, *Science* 221, 661—663 (1983). The process which occurs is a natural one. Lignin is one of the most abundant (250 million tons per year) and persistent natural chemicals. Its structure is variable and its molecular weight is relatively large. Lignin is not degraded by oxidase enzymes from most microorganisms; however, lignin is degraded by *Phanerochaete chrysosporium*, a white rot fungus.

In the article by *Forney*, L. J., et al it was suggested that the hydroxyl radical, an oxidant, degrades lignin and that the white rot fungi produced this radical. *Tien* et al subsequently showed that the fungi produce an extracellular oxygenase enzyme which uses hydrogen peroxide to generate the oxidant. They also showed that the oxidant radical is capable of degrading lignin as well as selected substructure model compounds which are used in experiments to simulate lignin.

What was not recognized by *Forney* et al and *Tien* et al was that relatively low molecular weight halogenated (Br and Cl) organic compounds, particularly with halogenated aromatic ring substituents which are bicyclic or other organic pollutants, which are man-made and which persist in the environment could be efficiently degraded by this fungus. At this point it is open to question as to whether a hydroxyl radical is responsible for the oxidation; however, it is clear that the oxygenase is involved in lignin degradation.

Eriksson, K et al Arch Microbiol 135:161—168 (1983) describes a mutant white rot fungi which has no cellulase activity and yet still degrades lignin. US patent No. 4478747 to Crawford et al discloses various white rot fungi used to degrade lignocellulose prior to acid polymerisation. US patent No. 3617436 describes various species of white rot fungi. Blanchette, R. A, Applied and Environment Microbiol 48, 647—653 (1984) describes a large number of white rot fungi and as can be seen, there are many hundreds of them which are known and which can be used in the present invention.

Leathem, F. G. et al Applied and Environmental Microbiol 46: 191—197 July 1983 describe the degradation of various phenolic compounds. One compound 2-chloroisovanillic acid was only poorly degraded. There were no bicyclic compounds disclosed as being degraded.

There is also disclosed in a technical publication, (Biotechnology Advances, Volume 2, No. 2, February 1984, Pergamon Press, Oxford GB at pages 301—308, J. W. Joyce et al, a continuous biological process to decolourise bleach plant effluents), the treatment of waste from paper mills utilising phanerochaete chrysosporium fungus. This known treatment takes place in aqueous media and is aerobic, and operates so as to degrade lignin and chlorolignins. However, this technical publication does not teach the degradation of halogenated organic compounds to carbon dioxide and water, but merely discloses the decolourisation of waste streams issuing from bleach plants. Thus, it is stated in the publication that chromophores are largely polymeric, chlorinated, heavily oxidised degradation products of lignin produced during the bleaching process. The colour of the chromophores is removed by the use of a white rot fungus. However, this does not teach a substantial degradation of the halogenated organic compounds to carbon dioxide and water, since the document only describes organic compounds which are produced during the degradation treatment.

By contrast, the invention is concerned with a novel process for degrading a halogenated organic pollutant of a type which persists in environmental materials, and in such a way that a significant amount of the halogenated organic compound is degraded to form carbon dioxide and water.

Accordingly, in one aspect of the invention there is provided a process for degrading an organic pollutant compound by reaction under aerobic conditions with a fungal enzyme, characterised in that:

the organic pollutant compound is a halogenated organic pollutant of a type which persists in environmental materials;

the halogenated organic pollutant reacts in a reaction mixture with fungal enzymes of a type containing a lignin degrading enzyme expressed by a white rot fungus in a growth medium containing a minimal nitrogen source level and hydrogen peroxide; and,

a significant amount of the halogenated organic compound in the reaction mixture is degraded to form carbon dioxide and water.

The invention provides, in a further aspect, a fungal composition for degrading a halogenated organic pollutant by reaction under areobic conditions and which comprises:

(a) a biologically pure concentrate of a white rot fungus which generates a lignin degrading enzyme and hydrogen peroxide in the presence of a carbon source nutrient wherein the fungus has been grown in a growth medium containing a minimal nitrogen source level;

(b) a particulate cellulosic material, wherein the fungus is present in an amount sufficient to initiate decomposition of the halogenated organic compound in environmental materials with which the composition is to be mixed; and,

(c) a package for containing the composition and which prevents the fungus from being activated prior to being mixed with the environmental material.

Preferably, the fungus generates hydrogen peroxide during the degradation, and when, as is preferred, phanerochaete chrysosporium is used as the fungus, this generates in situ both oxygenase and hydrogen peroxide.

Preferably, oxygenase and hydrogen peroxide are provided by a biologically pure culture of a lignin degrading fungus or fungi mixed with the halogenated organic pollutant compound, whereby this avoids the need for introducing the hydrogen peroxide and oxygenase periodically into the reaction mixture, since the fungus produces both the extra cellular enzyme and hydrogen peroxide.

The most preferred fungus is, as indicated, *phanerochaete chrysosporium*, which produces oxygenase having a molecular weight of about 42,000 daltons.

The oxygenase enzyme from phanerochaete chrysosporium or other fungi which degrade lignin can be used for the reaction with a pollutant organic compound. The oxygenase can be obtained in a purified pure form by taking a culture filtrate from the fungi, dialyzing it and then lyophilizing the dialyzate to prepare a concentrate of the enzyme. The oxygenase and the hydrogen peroxide can be reacted with the pollutant organic compound in aqueous solution or suspension. The hydrogen peroxide can be either provided directly or generated in situ using glucose and glucose oxidase, a $H_2O_2$ generating enzyme. This process is not preferred because of the cost of isolating the enzyme which is an unnecessary step.

The preferred phanerochaete crysosporium was grown in a low nitrogen containing growth medium which has been found to stimulate lignolytic activity. The cultures were preferably grown at 37—39°C for six (6) days in a source of carbon, nitrogen, minerals, and the vitamin thiamins as described by Kirk et al (Arch Microbiol 117, 277—285, 1978).

The pollutant organic compounds can be mixed with various areobic matrices using a small volume of acetone which may then be allowed to evaporate. The matrices include lignin, cellulose (shredded paper), wood shavings, sawdust and humus. Water can be added to the matrix to give 50% by weight moisture and then the fungus can be added. The incubations are at 39°C (preferably between about 37° and 40°C) in air or oxygen. Environmental samples can be degraded, such as the PCB's in Kalamazoo, Michigan river sediments which may or may not require a cellulose matrix depending upon the amount of organic nutrients already present.

Unexpectedly it was found that the secondary metabolism (which induces the oxygenase), resulted in complete degradation of the pollutant compounds to $CO_2$. This result is unprecedented as far as the inventors know, since in many instances there are halogenated organic compounds formed in biodegradative processes which are not degraded to $CO_2$ by microorganisms.

In the drawings

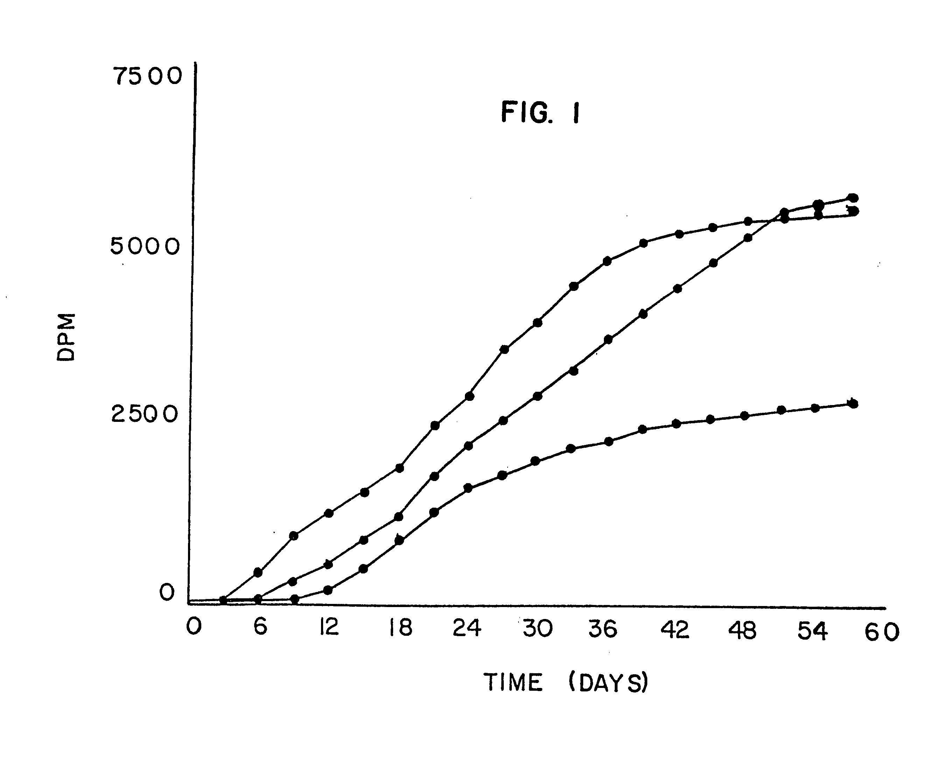

Figure 1 is a graph showing $^{14}CO_2$ evolution from $^{14}C$-DDT in Nitrogen Deficient Cultures of *P. chrysosporium*. Cultures of *P. chrysosporium* were incubated at 37°—39°C as described by Kirk et al. (Arch. Microbiol. *117*, 277—285, 1978). Each culture contained 1.25 nmoles (50 nCi or 110,000 dpm) of $^{14}C$-labeled DDT.

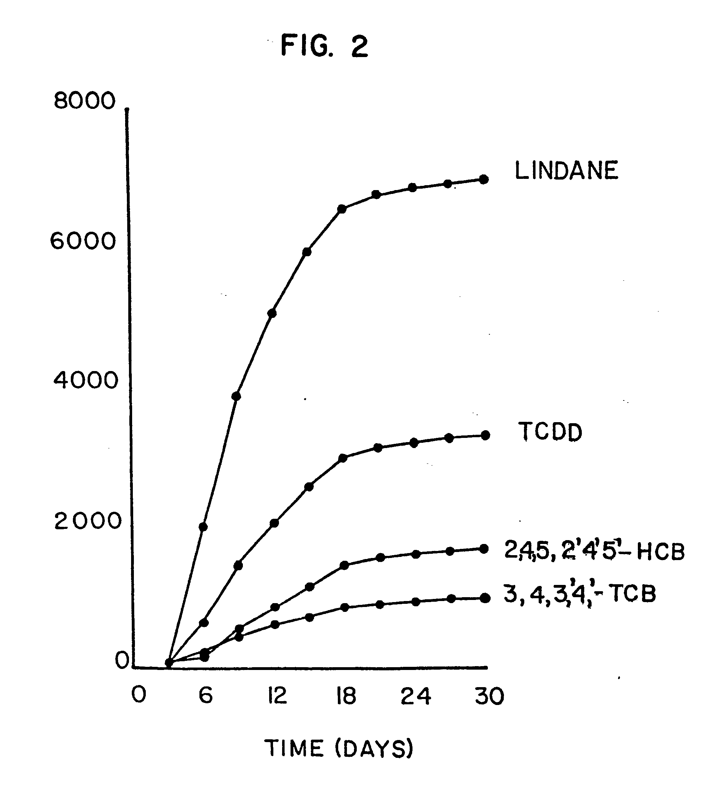

Figure 2 is a graph showing $^{14}CO_2$ Evolution by Nitrogen Deficient Cultures of *P. chrysosporium* containing selected $^{14}C$-labeled Organohalides. Cultures of *P. chrysosporium* were incubated at 37°—39°C as described by Kirk et al. (Arch. Microbiol. *117*, 277—285, 1978). Each culture contained 50 nCi (110,000 dpm) of a $^{14}C$-labeled organohalide corresponding to a mass of 0.93, 6.1, 0.34 and 1.8. nmoles of Lindane, TCDD, 2,4,5,2',4',5'-HCB and 3,4,3',4'-TCB, respectively.

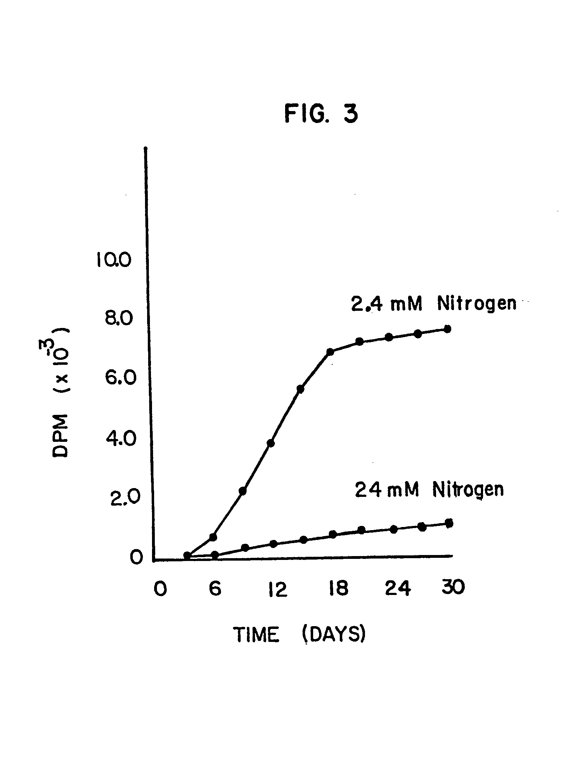

Figure 3 is a graph showing the effect of Nitrogen on the Evolution of $^{14}CO_2$ from $^{14}C$-DDT in Cultures of *P. chrysosporium*. Cultures of *P. chrysosporium* were incubated at 37°—39°C as described by Kirk et al. (Arch. Microbiol. *117*, 277—285, 1978). Each culture contained 1.25 nmoles (110,000 dpm) of $^{14}C$-labeled DDT. Nitrogen concentration (2.4 mM or 24 mM) refers to the amount of nitrogen present in the culture media as ammonium tartrate.

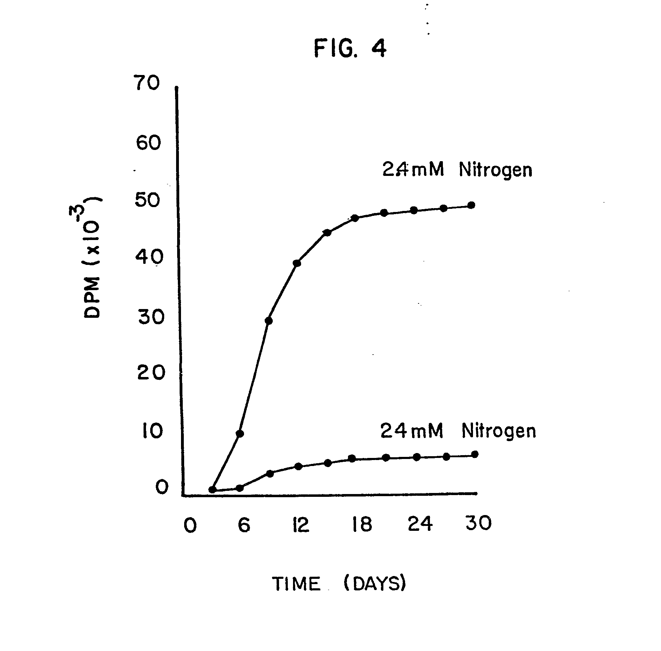

Figure 4 is a graph showing the effect of Nitrogen Concentration on the Evolution of $^{14}CO_2$ from $^{14}C$-Lignin in Cultures of *P. chrysosporium*. Cultures of *P. chrysosporium* were incubated at 37°—39°C as described by Kirk et al. (Arch. Microbiol. *117*, 277—285, 1978). Each culture contained 0.122 mg (110,000 dm) of $^{14}C$-labeled lignin. Nitrogen concentration (2.4 mM and 24 mM) refers to the amount of nitrogen present in the culture media as ammonium tartrate.

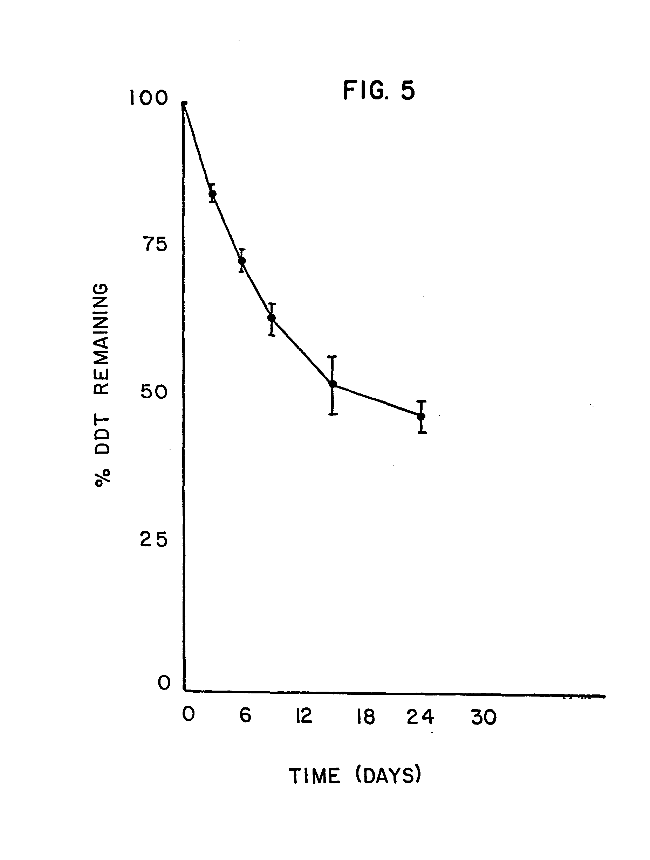

Figure 5 is a graph showing the disappearance of DDT in Nitrogen Deficient Cultures of *P. chrysosporium*. Triplicate cultures of *P. chrysosporium* were incubated at 37°—39°C as described by Kirk et al. (Arch. Microbiol. *117*, 277—285, 1978). The initial concentration of DDT was 1.7 ppm.

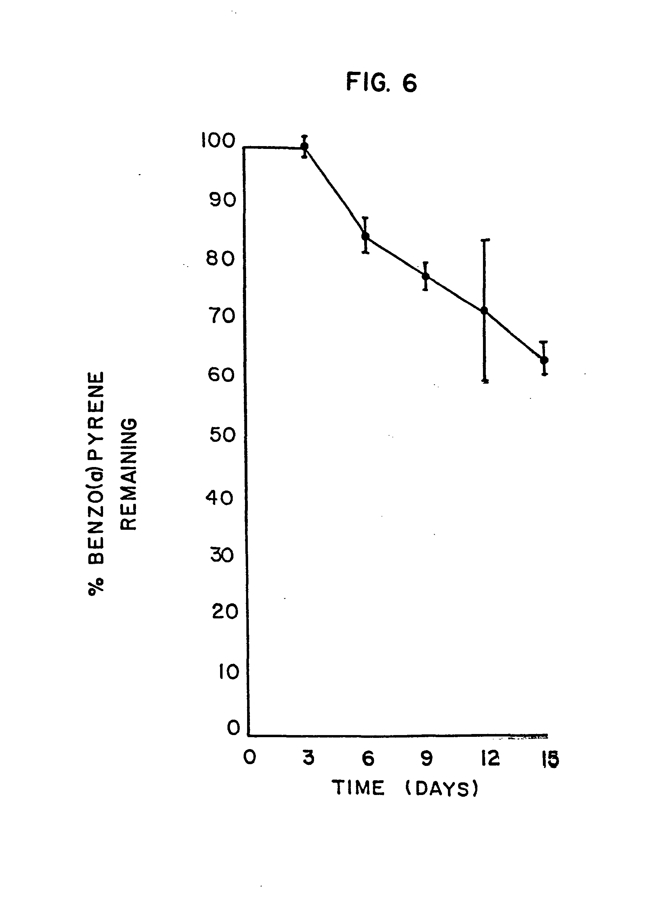

Figure 6 is a graph showing the disappearance of Benzo(a)pyrene in Nitrogen Deficient Cultures of *P. chrysosporium*. Quintuplicate cultures of *P. chrysosporium* were incubated at 37°—39°C as described by Kirk et al. (Arch. Microbiol. *117*, 277—285, 1978). Benzo(a)pyrene was extracted and quantitated as described by Selkirk et al. (Cancer Res. *34*, 3473, 1974). The initial concentration of benzo(a)pyrene was 100 µM.

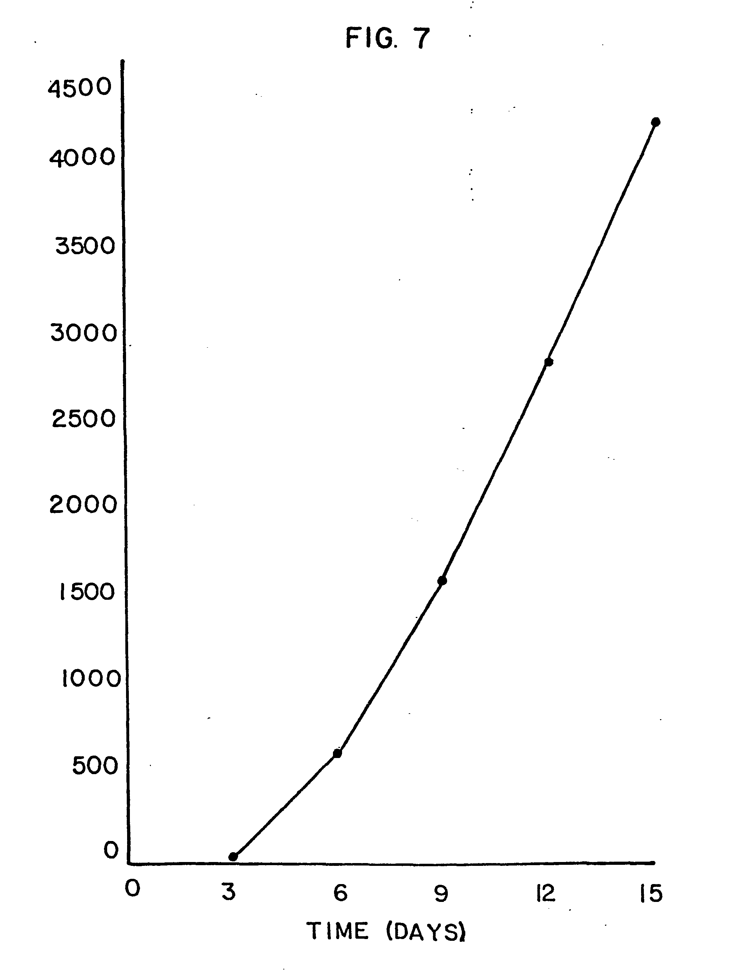

Figure 7 is a graph showing evolution of $^{14}CO_2$ from $^{14}C$-Benzo(a)pyrene in Nitrogen Deficient Cultures of *P. chrysosporium*. Cultures of *P. chrysosporium* were incubated at 37°—39°C as described by Kirk et al. (Arch. Microbiol. *117*, 277—285, 1978). Each culture contained 1.0 umole (91 nCi or 199,800 dpm) of $^{14}C$-benzo(a)pyrene.

General description
Specific description

The following is a specific description of the process of the present invention.

Example 1

In order to test for the preferred growth temperature for the *Phanerochaete chrysosporium*, various cultures were prepared and tested. Six (6) separate 10 ml liquid cultures of *Phanerochaete chrysosporium* were prepared using 1 ml of a spore suspension in 9 ml of a culture medium as described by *Forney* et al. The culture medium was low in nitrogen source which, based upon the results of *Forney* et al, appears to induce the activity of the fungal culture. Two of the cultures were incubated at 37°C and four were incubated at room temperature. It was found that the fungus grew better at 37°C, although significant growth did occur at room temperatures.

Example 2

In this experiment 2,4,5,2',4',5'-hexabromo biphenyl (HBB) was used as a model halogenated bicyclic organic compounds. This compound is a persistent man-made environmental pollutant. The compound was incubated in an aqueous solution containing four (4) day old cultures of *Phanerochaete chrysosporium* as described by *Forney* et al. Thiamine is a desirable ingredient for this fungus. There were fungal extracts in three (3) separate vials. The vials were incubated at 37°C and the vials were tested at 0, 2 and 6 days post inoculation for the presence of the HBB.

The contents of each vial upon testing was quantitatively transferred to a 15 ml graduated centrifuge tube with rinses using acetone. The volume was adjusted to 10.0 ml in acetone. A 5.0 ml aliquot of each of these samples was evaporated to approximately 0.5 ml extracted with 5 ml of toluene and passed over a 9 centimeter×.7 centimeter Florisil column with elution by 10 ml of toluene. The samples were then adjusted to a final volume of 10.0 ml with toluene and subjected to gas chromatographic analysis. Based upon the analysis the results are shown in Table 1.

TABLE 1

| Sample (time) | Percent recovered |
|---|---|
| 0 days | 81.9 |
| 2 days | 23.3 |
| 6 days | 18.3 |

As can be seen from Example 1, the concentration of HBB was substantially reduced as a result of fungal degradation. Over a period of time the HBB or intermediates thereof could be completely degraded by the process by repeated treatments.

Example 3

In this example DDT 1,1-Bis(4-chlorophenyl)-2,2,2-trichloroethane) was assayed for degradation by *Phanerochaete chrysosporium*. This compound is also bicyclic.

Two 10 milliliter cultures in 125 ml Erlenmeyer flasks received 3.4 microliters of DDT in acetone (50 mg/10 ml) which produced a concentration of 1.7 ppm DDT. At the time the DDT was added to the culture, the culture was four (4) days old. The cultures were incubated at 37°C with the DDT.

Eighteen (18) days later the incubation by the *Phanerochaete chrysosporium* was terminated by adding 25 ml of acetonitrile to the culture and the mixture was homogenized in a homogenizer (10—20 Stokes). The mixture was transferred to a separatory funnel and vigorously shaken (1 minute) with 2 milliliters of a saturated sodium chloride solution along with 60 ml of water. Approximately 60 ml of petroleum ether was then added to the mixture which was vigorously shaken in the separatory funnel for about 1 to 2 minutes. The aqueous phase was separated and saved. The organic phase was collected in a 100 ml volumetric flask. Approximately 40 ml of petroleum ether was used to rinse all the glassware, the aqueous layer was reextracted with this volume of petroleum ether, the organic layer was then drained into the 100 ml flask to the 100 ml mark.

A control culture was spiked with 3.4 microliters of DDT (5.0 milligrams/milliliter acetone) and extracted in the same manner. In the same manner 3.4 milliliters of DDT (5.0 milligrams/milliliter acetone) in petroleum ether was used as a further control.

The culture extract, the extraction control and the DDT petroleum ether was assayed by gas chromatograph as in Example 2. Extracts were diluted 1:10 for gas chromatographic analysis to give a 100 final dilution. The result was that 70.0% of the original concentration of DDT remained after 21 days of incubation with the fungus at an initial concentration of 1.7 ppm of DDT.

Example 4

The experiment of Example 3 was repeated, except that the cultures were incubated with the DDT in an atmosphere of oxygen and at 39°C. The cultures were treated with oxygen for one (1) minute at 3 day intervals prior to testing. The results are shown in Table 2 for two separate tests.

TABLE 2

| Day | % of DDT remaining | |
|---|---|---|
| 15 | 39.9 | 40.5 |
| 21 | 20.9 | 25.9 |
| 33 | 26.4 | 20.9 |

As can be seen from this Example, the DDT is in fact degraded over a period of time.

Example 5

In this experiment $^{14}C$ labeled DDT was used. Triplicate cultures were prepared with *Phanerochaete crysosporium* fungus. The triplicate cultures were prepared using 125 ml Erlenmeyer flasks as described by *Kirk* et al Archives of Microbiology 117 277—285 (1978). The purpose was to determine whether $^{14}CO_2$ would be produced. Each culture contained 110,000 dpm of $^{14}C$-DDT. The culture was assayed for carbon dioxide evolution every three (3) days.

Day three (3) samples were collected for the carbon dioxide evolution studies. Oxygen was introduced into the closed culture vessel. Gases were expelled through latex tubing equipped with a 22 gauge needle and bubbled into a carbon dioxide trap (5 ml scintillation fluid, 1 ml ethanolamine and 4 ml methanol). The time for gassing was 15 minutes per sample. In the same manner, the day six (6) samples were collected and so on every three (3) days for a total of 57 days. The results are shown in Table 3.

TABLE 3
$^{14}CO_2$ Trapping from $^{14}$C-DDT

| | DPM | | DPM | | DPM |
|---|---|---|---|---|---|
| A-0 | .10.4 | B-0 | 4.5 | C-0 | 1.4 |
| 3 | 15.8 | 3 | 8.1 | 3 | 3.2 |
| 6 | 43.7 | 6 | 396.7 | 6 | 6.7 |
| 9 | 300.8 | 9 | 965.3 | 9 | 36.7 |
| 12 | 518.5 | 12 | 1290.2 | 12 | 193.5 |
| 15 | 909.3 | 15 | 1582.6 | 15 | 471.5 |
| 18 | 1224.1 | 18 | 1963.0 | 18 | 900.8 |
| 21 | 1826.7 | 21 | 2568.3 | 21 | 1313.3 |
| 24 | 2274.6 | 24 | 3013.0 | 24 | 1623.1 |
| 27 | 2630.3 | 27 | 3656.6 | 27 | 1810.7 |
| 30 | 2992.3 | 30 | 4030.4 | 30 | 2037.3 |
| 33 | 3370.3 | 33 | 4525.4 | 33 | 2238.1 |
| 36 | 3793.5 | 36 | 4929.9 | 36 | 2375.2 |
| 39 | 4172.8 | 39 | 5189.9 | 39 | 2522.5 |
| 42 | 4527.2 | 42 | 5301.6 | 42 | 2641.3 |
| 45 | 4915.9 | 45 | 5399.8 | 45 | 2699.0 |
| 48 | 5507.3 | 48 | 5478.9 | 48 | 2746.9 |
| 51 | 5659.5 | 51 | 5528.8 | 51 | 2793.0 |
| 54 | 5745.9 | 54 | 5578.8 | 54 | 2834.7 |
| 57 | 5855.7 | 57 | 5638.3 | 57 | 2892.3 |

The samples were assayed for radioactivity on a Packard™ Tricarb Liquid Scintillation Spectrometer. The results are graphically shown for each of the three samples in Figure 1. It appeared that considerable variation occurred in the identical cultures in the rate of $^{14}CO_2$ production. Once carbon dioxide evolution began in each culture, the slope, i.e. the rate of carbon dioxide evolution was the same for all three cultures. It was observed that no carbon dioxide evolution occurred in any culture until day 6. This result coincides with that found in the literature for lignin degradation by *Tien* et al and *Forney* et al.

Example 6

The degradation of other $^{14}$C-labeled halogenated organic compounds by *Phanerochaete chrysosporium* was performed. Thus $^{14}$C-2, 4, 5, 2′, 4′, 5′-hexachlorobiphenyl; $^{14}$C 3, 4, 3′, 4′-tetrachlorobiphenyl; $^{14}$C-lindane and $^{14}$C-2,3,7,8, tetrachlorodibenzo-p-dioxin were also metabolized to $^{14}CO_2$ by *Phanerochaete chrysosporium*. At the same time it was to be determined whether $^{14}CO_2$ evolution from $^{14}$C lignin coincides with the $^{14}CO_2$ evolution from the halogenated organic compounds. Finally experiments were conducted to determine if high nitrogen concentration inhibited carbon dioxide evolution from $^{14}$C-DDT. This phenomena of high nitrogen inhibition of $CO_2$ evolution is observed when $^{14}$C-labeled lignin is used as substrate.

*Protocol*: Cultures were prepared in quintuplicate for $^{14}$C-DDT, $^{14}$C-2,4,5,2',4',5'-HCB, 3,4,3',4'-TCB, $^{14}$C-Lindane and $^{14}$C-TCDD. The culture medium was the same as that used in Example 5. An additional set of five (5) cultures were prepared for $^{14}$C-lignin. Still another five (5) cultures were prepared for $^{14}$C-DDT. These differed from the others in that they contained 12.0 mM diammonium tartrate (24 mM nitrogen) and were designated "high nitrogen".

All cultures were equipped for [14]$CO_2$ evolution studies as described by *Kirk* et al (Arch. Microbiol. 117, 277—285 (1978).

All cultures were incubated at 37—39°C for 3 days under ambient atmosphere. At day 3, the first time points were taken by flushing with 99.7% $O_2$ as described by *Kirk* et al (Arch. Microbiol. 117, 277—285 (1978).

Subsequent time points were taken at three (3) day intervals.

In addition to test flasks, a control was run in which all the components of the culture media were present except the fungus.

Results

TABLE 4

Lignin

| Day | dpm/3 days | Running total (dpm) |
|---|---|---|
| 3 | 44.3± 20.6 | 44.3 |
| 6 | 10,888.5±2191 | 10,932.8 |
| 9 | 19,257 ±2056 | 30,189.8 |
| 12 | 9,559.7±1076 | 39,749.5 |
| 15 | 5,575.2± 600.9 | 45,324.7 |
| 18 | 2,144.3± 609.3 | 47,469.0 |
| 21 | 983.0± 223.9 | 48,452.0 |
| 24 | 501.9± 112.9 | 48,953.9 |
| 27 | 426.7± 112.1 | 49,375.6 |

The results are shown in Figure 4

TABLE 5

DDT

| Day | High nitrogen | | "Regular" nitrogen levels | |
|---|---|---|---|---|
| | dpm/3 days | Running total | dpm/3 days | Running total |
| 3 | 0 | 0 | 1.7± 1.5 | 1.76 |
| 6 | 50.5± 13.8 | 50.5 | 811.7±127 | 813.4 |
| 9 | 374.0±166.6 | 424.5 | 1525.5±197.3 | 2338.9 |
| 12 | 172.0± 25.4 | 596.5 | 1566.9±285 | 3905.8 |
| 15 | 119.4± 17.5 | 715.9 | 1930.8±341.5 | 5836.6 |
| 18 | 156.8±100.8 | 872.7 | 1179.3±266.3 | 7015.9 |
| 21 | 118.8± 44.2 | 991.5 | 296.2± 83.7 | 7312.1 |
| 24 | 85.2± 15.3 | 1076.7 | 164.0± 44.0 | 7476.1 |
| 27 | 50.0± 26.0 | 1126.7 | 140.3± 40.6 | 7616.4 |

The results are shown in Figure 3.

TABLE 6
3,4,7,8,-TCDD

| Day | dpm/3 days | Running total |
|-----|-----------|---------------|
| 3 | 7.74± 4.0 | 7.74 |
| 6 | 631.1 ±111.3 | 639.5 |
| 9 | 816.5 ±134.9 | 1456.0 |
| 12 | 591.2 ±182.0 | 2047.2 |
| 15 | 560.3 ±185.6 | 2607.5 |
| 18 | 395.3 ±141.8 | 3002.8 |
| 21 | 138.3 ± 50.6 | 3141.1 |
| 24 | 71.4 ± 28.3 | 3212.5 |
| 27 | 57.0 ± 29.7 | 3269.5 |

The results are shown in Figure 2.

TABLE 7
Lindane

| Day | dpm/3 days | Running total |
|-----|-----------|---------------|
| 3 | 77.8± 14.3 | 77.8 |
| 6 | 1957.5±208.3 | 2035.3 |
| 9 | 1850.2±205.7 | 3885.5 |
| 12 | 1185.1±182.0 | 3070.6 |
| 15 | 887.5±175.9 | 5958.1 |
| 18 | 603.5± 76.6 | 6561.6 |
| 21 | 202.0± 30.4 | 6763.6 |
| 24 | 89.6± 21.3 | 6853.2 |
| 27 | 75.4± 14.7 | 6928.6 |

The results are shown in Figure 2.

# EP 0 192 237 B1

### TABLE 8
### TCB and HCB

| Day | dpm/3 days | Running total | dpm/3 days | Running total |
|---|---|---|---|---|
| 3 | 4.5± 1.6 | 4.5 | 0 | 0 |
| 6 | 211.0±42 | 215.5 | 167.1±13 | 167.1±13 |
| 9 | 226.1±59.7 | 441.7 | 369.9±36.9 | 537 |
| 12 | 163.3±46.7 | 605.0 | 335.8±20.1 | 872.8 |
| 15 | 144.8±39.3 | 749.8 | 287.4±17.6 | 1160.2 |
| 18 | 135.9±92 | 885.7 | 321.3±23.6 | 1481.5 |
| 21 | 47.0±20 | 932.7 | 81.5±20 | 1563.0 |
| 24 | 26.1± 6.8 | 958.8 | 39.5± 4 | 1602.5 |
| 27 | 16.9±12.9 | 975.7 | 43.4± 8.4 | 1645.9 |

The results are shown in Figure 2.

Comments and conclusions

$^{14}CO_2$ evolution from $^{14}C$-DDT by *Phanerochaete chrysosporium* was a reproducible phenomena.

In addition to $^{14}C$-DDT, *Phanerochaete chrysosporium* was able to metabolize $^{14}C$-2,4,5,2'4',5',-hexachlorobiphenyl (HCB), $^{14}C$-3,4,3',4'-tetrachlorobiphenyl (TCB), $^{14}C$-lindane, and 3,4,7,8-tetrachlorodibenzo-p-dioxin (dioxin) to $^{14}CO_2$.

$^{14}CO_2$ evolution from $^{14}C$-lignin coincides with $^{14}CO_2$ evolution from $^{14}C$-2,4,5,2',4',5',-hexachlorobiphenyl, $^{14}C$-3,4,3'4', tetrachlorobiphenyl, $^{14}C$-lindane and 2,3,7,8,-tetrachlorodibenzo-p-dioxin. This suggested that the lignin degrading system of *Phanerochaete chrysosporium* was required for degradation of these organohalides.

High nitrogen concentration suppressed $^{14}CO_2$ evolution from $^{14}C$-DDT. This was the same phenomena observed with $^{14}CO_2$ evolution from lignin (*Kirk* et al., Arch. Microbiol. 117, 277—285, 1978). This further indicates that the lignin degrading system of *Phanerochaete chrysosporium* is involved in degradation of these organohalides.

Example 7

Purpose:

To demonstrate reproducibility of initial finding shown in DDT degradation.

Protocol:

Eight cultures of *Phanerochaete chrysosporium* containing 1.7 ppm DDT were set up in triplicate. In addition, two control cultures (minus *Phanerochaete chrysosporium*) were set up in duplicate. Cultures were sealed with #5 rubber stopper and incubated in the dark at 37°C.

On days 3, 6, 9, 12, 15, 21 and 30, three cultures and two control cultures were analyzed for DDT concentration. Because the final concentration of the standard was 170 ppb (3.4 microliter DDT) (5.0 microgram/milliliter diluted to 100 ml with petroleum ether), this value was chosen for calibration. Note, 170 ppb. is also the concentration one would expect if no DDT was metabolized. An exception to the procedure previously described was that after the extract was collected in a 100 ml flask, no further dilution was required for gas chromatographic analysis.

A standard was injected before and after each assay. The average of the two standards was used to determine the % DDT remaining.

Each culture was assayed three times for DDT concentration and the average was determined.

The values obtained for each of the three cultures were averaged and the average ±S.D. was calculated.

10

TABLE 9

| Day | (1) Culture | (2) Culture | (3) Culture | Ave+S.D. |
|---|---|---|---|---|
| 3 | 88.2 | 85.1 | 87.9 | 87.1± 1.4% |
| 6 | 87.7 | 76.7 | 84.5 | 83.0± 4.6% |
| 9 | 74.2 | 63.2 | 74.7 | 70.7± 5.3% |
| 12 | 61.4 | 70.9 | 65.7 | 66.0± 3.9% |
| 15 | 68.0 | 57.7 | 44.1 | 56.6± 9.8 |
| 21 | 85.2* | 45.5 | 46.1 | 58.9±18.6 |

*Believed to be an error in reading

The study was repeated and the results are shown in Figure 5.
The results were reproducible and comparable to the earlier studies.

Example 8

Figures 6 and 7 show the results for degradation of benzo(a)pyrene with *Phanerochaete chrysosporium* in the manner of Examples 6 and 7. As can be seen, this resistant chemical is degraded to $CO_2$.

The studies using $^{14}$C-labeled compounds demonstrated that all the compounds tested (DDT, 2,4,5,2',4',5'-HCB, 3,4,3',4'-TCB, TCDD, Lindane, and benzo(a)pyrene) were degraded to carbon dioxide by nitrogen deficient cultures of *P. chrysosporium*. Because all of the radiolabeled compounds were labeled exclusively in ring carbons, it was concluded that *P. chrysosporium* has the ability to degrade halogenated aromatic rings of environmental pollutants which are normally difficult to degrade using microorganisms. It is also apparent that *P. chrysosporium* is able to dechlorinate alkyl chlorides as evidenced by the fact that Lindane, a compound which is chlorinated on every carbon atom, is degraded to carbon dioxide. Collaborating evidence was obtained in DDT metabolite studies in which it was demonstrated that DDT is converted to DDD, as a result of reductive dechlorination.

Although all radiolabeled compounds assayed could be degraded to [14]$CO_2$, this degradation was a relatively slow process. This is not a problem in environmental degradations. The highly chlorinated PCB congener 3,4,3',4'-TCB and 2,4,5,2',4',5'-HCB exhibited rates (pmoles of [14]$CO_2$ evolved per culture per 30 days) of 16 and 91, respectively. DDT and TCDD showed rates of 10 and 34, while Lindane, a non-aromatic polychlorinated pesticide and benzo(a)pyrene, a non-halogenated polyaromatic hydrocarbon showed the highest rates of 58 and 78, respectively. In all cases, [14]$CO_2$ evolution was induced between the third and sixth day of incubation and showed a maximum rate between the third and eighteenth day of incubation after which [14]$CO_2$ evolution continued at decreasing rates until the end of the thirty day incubation.

Using $^{14}$C-DDT demonstrated that [14]$CO_2$ evolution was dependent on the presence of glucose. After the 30 day incubation period, increased rates of [14]$CO_2$ evolution could be induced simply by adding glucose to the glucose depleted culture. It was also shown that the rate of [14]$CO_2$ evolution was dependent on the absolute concentration of glucose in the culture medium. For example a two-fold increase in the glucose concentration (from 56 mM to 112 mM) was shown to more than double the amount of [14]$CO_2$ evolved over the 30 days incubation period. It is important to note that even in stationary phase cultures constitutive levels of [14]$CO_2$ evolution continued to occur. In other experiments, the rate of DDT disappearance was monitored by GLC. It was shown that 50—60% of the DDT initially present in culture was metabolized during the 30 day incubation period. DDD dicofol and DBP were identified as major metabolites. Upon addition of more glucose and continued incubation for 18 more days, it was demonstrated that more than 90% of the DDT initially present had been metabolized. Furthermore, there was no significant accumulation of identifiable DDT metabolites.

By comparison, lignin degradation in *P. chrysosporium* was induced in nitrogen deficient cultures after approximately 3 days of incubation, after which [14]$CO_2$ evolution from $^{14}$C-lignin was observed. Maximal rates of lignin degradation, as assayed by [14]$CO_2$, were observed between day 3 and day 18 of the incubation. Lignin degradation continues to occur, albeit at successively lower rates, until the glucose concentration was depleted. The presence of a suitable carbohydrate source was critical in this system because hydrogen peroxide, a required cosubstrate for lignin degradation, was generated in actively respiring cultures. The same pattern of induction at day 3, maximal activity between days 6 and 18, and subsequent metabolism until the glucose supply was depleted was observed in [14]$CO_2$ evolution studies in which ring labeled $^{14}$C-DDT was presented as substrate. Whereas nitrogen deficiency induces $^{14}$C-lignin degradation to [14]$CO_2$, nitrogen sufficient cultures suppressed lignin degradation. Again, the same pattern was seen for the degradation of [14]-DDT.

Previous efforts using microorganisms have focused on a number of strategies to demonstrate or enhance their relative abilities to degrade various persistent xenobiotics. For example, there are a number of studies in which microorganisms have been adapted to grow on carbon sources whose structure resembles the organic pollutant under study. When the microorganism is presented with the structurally similar organic pollutant, it too is often metabolized. This is known as analog induced metabolism. Still other investigators have attempted to culture microorganisms using the organic pollutant itself as the sole carbon source with the intent to isolate strains that could be used to inoculate areas in the environment that have been contaminated with the pollutant in question. Other studies have focussed on the use of anaerobic organisms. This strategy has been adopted because many organic pollutants are found in lake and river sediments and landfills, sites where oxygen availability is limiting. *Suflita* et al (Science 18, 1115 1982), for example have demonstrated that a methanogenic bacterial consortium from sewage sludge possess the ability to dehalogenate and sometimes metabolize a variety of halobenzoates to methane and carbon dioxide.

The present invention has focused on the use of *P. chrysosporium* as a useful organism in aerobic biodegradation. Fungi in general are the principle degraders of bio-organic molecules in nature. Because most organic nutrients are presented to fungi as large, insoluble macromolecular complexes, the organism must first degrade these large complexes to smaller substituents which may then be internalized and used as a source of nutrients. This is accomplished by the secretion of a battery of stable extracellular enzymes which may include proteases, lipases, cellulases and, in the case of *P. chrysosporium*, ligninases. Since many organic pollutants are physically absorbed in soils and sediments, thus making them unavailable for metabolism, these extracellular enzymes provide a mechanism whereby organic pollutants are released from these barriers to metabolism.

The enzyme system of *P. chrysosporium* is deserving of special note because it is non-specific and non-stereoselective in its action. This is precisely the types of mechanism which one would select for site decontamination especially when one considers that contamination by only one compound is likely to be the exception rather than the rule.

It has been postulated that selective pressure to induce the evolution of microorganisms capable of degrading recalcitrant man-made compounds may occur only in ecological niches where the organopollutant is present in concentrations high enough to cause enzyme induction and subsequent metabolism of the compound in question. Therefore pollutants present in low concentrations may not be metabolized. In *P. chrysosporium*, we have shown that, like lignin degradation, organohalide degradation is induced, not by the substrates presence, but by nitrogen deficiency. Thus high levels of substrate need not be present to induce the enzymes required to initiate their biodegradation.

Numerous strategies have been used in the aerobic treatment of contaminated waste effluents, sludges, sediments and landfills. Activated sludge processes, aerated lagoons, aerobic digestion, trickling filters, rotary biological contactors and aerobic composts are examples. The effectiveness of all of these systems is ultimately dependent upon the microorganisms present in the system. Thus it is critical that the most appropriate organisms (i.e., those with a demonstrated inherent ability to degrade a wide range of environmental pollutants) be selected for inclusion in these processes. Biotreatment systems inoculated with *P. chrysosporium* and fortified with a suitable carbohydrate source under nitrogen limiting conditions, can provide an effective and economical means for the biological detoxification and disposal of hazardous chemical wastes.

The feasibility of using *Phanerochaete chrysosporium* to degrade pollutant organic compounds is clear based upon the Examples. The mechanism of biodegradation is particularly advantageous. The oxidant is generated extracellularly and it appears to have no adverse affect on the fungus. The result is that the pollutant organic compound being degraded does not have to be absorbed by the fungi in order to be degraded. The oxygenase does not have to recognize the organic compound as a substrate in order to provide the usual enzyme-substrate complex necessary for biodegradation. The enzymes secreted by the white rot fungi attack many recalcitrant organic chemicals by breaking carbon carbon bonds. Additionally, this organism causes dehalogenation of organic compounds. Thus, less stable metabolites are formed which may be metabolized to $CO_2$ by more conventional enzyme systems.

The fungi are of the class *Basidimycetes* and are collectively known as white rot fungi and are ubiquitous in nature. This means that the fungi can be released in concentrated form in soil or wastes containing the pollutant organic compounds since no new organisms representing a potential danger to the environment are used.

The nutrients for the fungi are abundantly available and are generally present in the substrates containing the pollutant organic compounds. Examples are contaminated sediments in rivers and lakes. These sediments are generally of plant origin and highly contaminated with PCB for example in the Hudson River in New York and, the Kalamazoo River and the Great Lakes in Michigan. All of these pollutants can be degraded.

The fungi require aerobic conditions in order to generate the oxidant. This means that various systems for aerating the environmental materials being treated need to be used. Equipment for this kind of treatment is well known. Sediments only require dredging from the bottom of a river or lake to be placed in a temporary aerobic compost. High rate composting of organic wastes would be an economic means of treatment of toxic compounds prior to ultimate usage or disposal of the waste.

Hydrogen peroxide is commercially available. Thus the process of the present invention can be conducted chemically in the absence of the fungi by continuously mixing hydrogen peroxide and the enzymes from the white rot fungi with the pollutant organic compound over a period of time until it is degraded. However, the use of the *Phanerochaete chrysosporium* or other white rot fungi for this purpose is preferred since this fungus produces the oxygenase and hydrogen peroxide naturally. Further, the presence of the fungus is required if it is desired that degradation go completely to $CO_2$.

It will be appreciated that the process of the present invention can be conducted in an open system in the environment or alternatively in a closed system in a reaction vessel. In the closed system the oxygen or air can be introduced by various known means.

It is preferred where environmental samples are being treated such as soils and sediments from rivers or lakes that they be combined with sawdust or other particulate cellulosic material as a source of nutrients for the *Phanerochaete chrysosporium*. The cellulosic materials provide glucose for the fungi which facilitates hydrogen peroxide generation. Glucose can also be added directly. Mixing in particulate cellulosic material may also physically facilitate areation of the materials being treated, a condition which is necessary for the degradation.

Since the enzyme systems secreted by *P. chrysosporium* attack carbon-carbon and carbon-halogen bonds, the process of the present invention can be used to degrade pollutant organic compounds. The process is particularly advantageous for halogenated bi- or di-aromatic or ring compounds which resist natural degradation in the environment. Such compounds are those described in the preceding examples.

The fungi are packaged for shipment and use in a manner so that they are not activated. Generally this is accomplished using dry and anaerobic packaging conditions.

It will be appreciated that the foregoing description is merely illustrative of the present invention and that there are numerous variations which will occur to those skilled in the art. It is intended that all of these variations be included within the scope of the present invention.

## Claims

1. A process for degrading an organic pollutant compound by reaction under aerobic conditions with a fungal enzyme, characterised in that:

the organic pollutant compound is a halogenated organic pollutant of a type which persists in environmental materials;

the halogenated organic pollutant reacts in a reaction mixture with fungal enzymes of a type containing a lignin degrading enzyme expressed by a white rot fungus in a growth medium containing a minimal nitrogen source level and hydrogen peroxide; and,

a significant amount of the halogenated organic compound in the reaction mixture is degraded to form carbon dioxide and water.

2. A process according to Claim 1, characterised in that some of the fungal enzymes are extracellular.

3. A process according to Claim 1 or 2, characterised in that the enzymes and hydrogen peroxide are provided in the reaction mixture by introducing a culture of the fungus which has been grown in the growth medium.

4. A process according to Claim 3, characterised in that the culture contains a stationary or log growth phase fungus.

5. A process according to Claim 3, characterised in that the fungus is living.

6. A process according to any of Claims 1 to 5, characterised in that the fungus is phanerochaete chrysosporium.

7. A process according to any of Claims 1 to 6, characterised in that the reaction mixture includes a carbon source which facilitates the generation of hydrogen peroxide by the fungus.

8. A process according to any of Claims 1 to 7, characterised in that the mixing and degrading take place at a temperature of less than the temperature which results in destruction of the enzyme.

9. A process according to Claim 1, characterised in that the reaction mixture is an aqueous medium.

10. A process according to Claim 9, characterised in that the enzymes and hydrogen peroxide are provided in the aqueous medium by growing the fungus in the growth medium to the stationary phase and then providing the fungus with the halogenated organic compound in the aqueous medium.

11. A process according to any of Claims 1 to 10, characterised in that the lignin degrading enzyme has a molecular size of about 42,000 daltons.

12. A process according to any of Claims 1 to 11, characterised in that the degrading occurs at a temperature that is not destructive of the enzyme.

13. A process according to Claim 10, characterised in that the growth medium includes sources of carbon, nitrogen, thianine and minerals for the fungus.

14. A process according to Claim 9, characterised in that cellulose or other suitable carbohydrate source is provided with the halogenated organic compound in the aqueous medium.

15. A process according to Claim 14, characterised in that the carbon source is a carbohydrate.

16. A process according to any of Claims 1 to 15, characterised in that the halogenated organic compound is contained as a mixture within environmental materials in which it persists, and such mixture is reacted with the said fungal enzymes.

17. A process according to Claim 16, characterised in that the environmental materials are soils, sludges or sediments or mixtures thereof.

18. A fungal composition for degrading a halogenated organic pollutant by reaction under aerobic conditions and which comprises:

(a) a biologically pure concentrate of a white rot fungus which generates a lignin degrading enzyme and hydrogen peroxide in the presence of a carbon source nutrient wherein the fungus has been grown in a growth medium containing a minimal nitrogen source level;

(b) a particulate cellulosic material, wherein the fungus is present in an amount sufficient to initiate decomposition of the halogenated organic compound in environmental materials with which the composition is to be mixed; and,

(c) a package for containing the composition and which prevents the fungus from being activated prior to being mixed with the environmental material.

**Patentansprüche**

1. Verfahren zum Abbau einer organischen Schadstoff-Verbindung durch Reaktion unter aeroben Bedingungen mit einem mykotischen Enzym, dadurch gekennzeichnet, daß die organische Schadstoff-Verbindung ein halogenisierter organischer Schadstoff der Art ist, der im Umgebungsmaterialien persistent ist, daß der halogenisierte organische Schadstoff in einer Reaktionsmischung mit solchen mykotischen Enzymen der Art reagiert, die ein Lignin abbauendes Enzym als weißen Fäulnis-Pilz in einem Wachstumsmedium enthalten, das einen minimalen Stickstoff Basis-Wert und Wasserstoff-Superoxid aufweist, und daß ein wesentlicher Teil der halogensierten organischen Verbindung in der Reaktionsmischung zu Kohlendioxid und Wasser abgebaut wird.

2. Verfahren nach Anspruch 1, dadurch gekennzeichnet, daß einige der mykotischen Enzyme extracellulär ausgebildet sind.

3. Verfahren nach Anspruch 1 oder 2, dadurch gekennzeichnet, daß Enzyme und Wasserstoffsuperoxid in der Reaktionsmischung durch Einbringen einer Kultur des im Wachstumsmedium gezüchteten Pilzes vorhanden sind.

4. Verfahren nach Anspruch 3, dadurch gekennzeichnet, daß die Kultur einen stationären oder einen Pilz mit logarithmischen Wachstum enthält.

5. Verfahren nach Anspruch 3, dadurch gekennzeichnet, daß der Pilz ein lebender Pilz ist.

6. Verfahren nach einem oder mehreren der Ansprüche 1—5, dadurch gekennzeichnet, daß der Pilz ein phanerochaete chrysosporium Pilz ist.

7. Verfahren nach einem oder mehreren der Ansprüche 1—6, dadurch gekennzeichnet, daß die Reaktionsmischung eine Kohlenstoffbasis enthält, die die Erzeugung von Wasserstoff-Superoxid durch den Pilz fördert.

8. Verfahren nach einem oder mehreren der Ansprüche 1—7, dadurch gekennzeichnet, daß die Mischung und der Abbau bei einer Temperatur stattfindet, die geringer ist, als die Temperatur, bei der eine Zerstörung des Enzyms stattfindet.

9. Verfahren nach Anspruch 1, dadurch gekennzeichnet, daß die Reaktionsmischung ein wässriges Medium ist.

10. Verfahren nach Anspruch 9, dadurch gekennzeichnet, daß die Enzyme und Wasserstoff-Superoxid dadurch in dem wässrigen Medium vorhanden sind, daß der Pilz in dem Wachstumsmedium bis zur stationären Phase wächst und der Pilz dann mit der halogenisierten organischen Verbindung in das wässrige Medium gebracht wird.

11. Verfahren nach einem oder mehreren der Ansprüche 1—10, dadurch gekennzeichnet, daß das Lignin abbauende Enzym ein Molekulargröße von etwa 42.0000 Dalton aufweist.

12. Verfahren nach einem oder mehreren der Ansprüche 1—11, dadurch gekennzeichnet, daß der Abbau bei einer Temperatur erfolgt, die das Enzym nicht zerstört.

13. Verfahren nach Anspruch 10, dadurch gekennzeichnet, daß das Wachstumsmedium eine Kohlenstoffbasis, Stickstoff, Tiamin und Mineralien des Pilzes enthält.

14. Verfahren nach Anspruch 9, dadurch gekennzeichnet, daß Cellulose oder eine andere geeignete Kohlenhydratbasis zusammen mit der halogenisierten organischen Verbindung in dem wässrigen Medium vorhanden ist.

15. Verfahren nach Anspruch 14, dadurch gekennzeichnet, daß die Kohlenstoffbasis Kohlehydrat ist.

16. Verfahren nach einem oder mehreren der Ansprüche 1—15, dadurch gekennzeichnet, daß die halogenisierte organische Verbindung als Mischung in Umgebungsmaterialien, in denen es persistent ist, enthalten ist, und daß diese Mischung mit den mykotischen Enzym reagiert.

17. Verfahren nach Anspruch 16, dadurch gekennzeichnet, daß die Umgebungsmaterialien Boden, Schlamm oder Sedimente oder deren Mischungen sind.

18. Mykotische Zusammensetzung zum Abbau eines halogenisierten organischen Schadstoffs durch Reaktion unter aeroben Bedingungen, die enthält:

a) ein biologisch reines Konzentrat eines weißen Fäulnis-Pilzes, der ein Lignin abbauendes Enzym erzeugt sowie Wasserstoff-Superoxid bei Vorhandensein eines Kohlenstoffbasis-Nährmittels, bei dem der

# EP 0 192 237 B1

Pilz in dem Wachstumsmedium mit einem minimalen Stickstoffbasiswert aufgewachsen ist,

b) ein besonderes Cellulosematerial, in dem der Pilz in einer ausreichenden Menge vorhanden ist, daß der Zerfall der halogenisierten organischen Verbindung in Umgebungsmaterialien, mit denen die Verbindung gemischt ist, eingeleitet wird, und

c) eine Verpackung zur Aufnahme der Zusammensetzung, die die Aktivierung des Pilzes verhindert, bevor dieser mit den Umgebungsmaterialien vermischt wird.

## Revendications

1. Procédé pour dégrader un composé organique polluant par réaction en conditions aérobies avec une enzyme fongique, caractérisé en ce que:

le composé organique polluant est un polluant organique halogéné d'un type persistant dans les matières de l'environnement;

le polluant organique halogéné réagit dans un mélange réactionnel avec des enzymes fongiques d'un type contenant une enzyme dégradant la lignine constituée d'un champignon de la pourriture blanche dans un milieu de culture contenant un taux minimal d'une source d'azote et du peroxyde d'hydrogène; et

une quantité notable du composé organique halogéné dans le mélange réactionnel est dégradée pour former du dioxyde de carbone et de l'eau.

2. Procédé selon la revendication 1, caractérisé en ce que certaines des enzymes fongiques sont extracellulaires.

3. Procédé selon la revendication 1 ou 2, caractérisé en ce que les enzymes et le peroxyde d'hydrogène sont apportés au mélange réactionnel par introduction d'une culture du champignon qui a poussé dans le milieu de culture.

4. Procédé selon la revendication 3, caractérisé en ce que la culture contient un champignon en phase de croissance stationnaire ou logarithmique.

5. Procédé selon la revendication 3, caractérisé en ce que le champignon est vivant.

6. Procédé selon l'une quelconque des revendications 1 à 5, caractérisé en ce que le champignon est un *Phanerochaete chrysosporium*.

7. Procédé selon l'une quelconque des revendications 1 à 6, caractérisé en ce que le mélange réactionnel comprend une source de carbone qui facilite la production de peroxyde d'hydrogène par le champignon.

8. Procédé selon l'une quelconque des revendications 1 à 7, caractérisé en ce que le mélange et la dégradation sont effectués à une température inférieure à la température qui provoque une destruction de l'enzyme.

9. Procédé selon la revendication 1, caractérisé en ce que le mélange réactionnel est un milieu aqueux.

10. Procédé selon la revendication 9, caractérisé en ce que les enzymes et le peroxyde d'hydrogène sont apportés au milieu aqueux par culture du champignon dans le milieu de culture jusqu'à la phase stationnaire, puis apport du champignon avec le composé organiques halogéné dans le milieu aqueux.

11. Procédé selon l'une quelconque des revendications 1 à 10, caractérisé en ce que l'enzyme dégradant la lignine a une taille moléculaire d'environ 42 000 daltons.

12. Procédé selon l'une quelconque des revendications 1 à 11, caractérisé en ce que la dégradation se produit à une température qui ne détruit pas l'enzyme.

13. Procédé selon la revendication 10, caractérisé en ce que le milieu de culture comprend des sources de carbone et d'azote, de la thiamine et des substances minérales pour le champignon.

14. Procédé selon la revendication 9, caractérisé en ce que la cellulose ou une autre source appropriée de carbohydrate est introduite avec le composé organique halogéné dans le milieu aqueux.

15. Procédé selon la revendication 14, caractérisé en ce que la source de carbone est un carbohydrate.

16. Procédé selon l'une quelconque des revendications 1 à 15, caractérisé en ce que le composé organique halogéné est contenu sous forme d'un mélange dans les matières de l'environnement dans lesquelles il persiste, et on fait réagir ce mélange avec lesdites enzymes fongiques.

17. Procédé selon la revendication 16, caractérisé en ce que les matières de l'environnement sont des sols, des boues ou des sédiments, ou leurs mélanges.

18. Composition fongique pour la dégradation d'un polluant organique halogéné par réaction en conditions aérobies et qui comprend:

(a) un concentré biologiquement pur d'un champignon de la pourriture blanche qui produit une enzyme dégradant la lignine et du peroxyde d'hydrogène en présence d'une substance nitritive constituant une source de carbone dans lequel le champignon a été cultivé dans un milieu de culture contenant un taux minimal d'une source d'azote;

(b) une matière cellulosique en particules, dans laquelle le champignon est présent en une quantité suffisante pour amorcer la décomposition du composé organique halogéné dans les matières de l'environnement avec lesquelles la composition doit être mélangée; et

(c) un emballage pour contenir la composition et qui évite que le champignon soit activé avant d'être mélangé avec les matières de l'environnement.

15

FIG. I

EP 0 192 237 B1

FIG. 2

FIG. 3

FIG. 4

FIG. 5

FIG. 6

# FIG. 7

TIME (DAYS)